# NEUE EUROPÄISCHE PATENTSCHRIFT

(11) **EP 1 203 429 B2**
(45) Veröffentlichungstag und Bekanntmachung des Hinweises auf die Entscheidung über den Einspruch: **08.08.2007**
(45) Hinweis auf die Patenterteilung: 07.05.2003
(21) Anmeldenummer: 00949460.0
(22) Anmeldetag: 05.08.2000
(51) Int. Cl.: H02B 1/03, H02B 1/04

(54) **INSTALLATIONVERTEILER**
INSTALLATION DISTRIBUTOR
DISTRIBUTEUR D'INSTALLATION

(30) Priorität: 13.08.1999 DE 19938423
(43) Veröffentlichungstag der Anmeldung: 08.05.2002
(73) Patentinhaber: ABB PATENT GmbH, 68309 Mannheim (DE)
(72) Erfinder: PFEIFER, Theo, D-77876 Kappelrodeck (DE); ARMBRUSTER, Manfred, D-77855 Achern (DE)
(74) Vertreter: Miller, Toivo
(86) Internationale Anmeldenummer: PCT/EP2000/007617
(87) Internationale Veröffentlichungsnummer: WO 2001/013483

(56) Entgegenhaltungen:
- WO-A-99/45616
- DE-U1- 29 604 575
- DE-U1- 29 701 158
- DE-U1- 29 903 000
- DE-U1- 29 903 002
- GB-A- 2 218 275
- US-A- 5 853 300
- "Striebel Post" April 1994, Herausgeber: Striebel & John GmbH & Co. KG

## Beschreibung

Die Erfindung betrifft eine Installationsverteilung, insbesondere einen Zählerplatz, gemäß dem Oberbegriff des Anspruches 1.

Zur Verteilung des elektrischen Stromes von einer Zugangsleitung in einem Installationsverteiler werden Hauptleitungsabzweigklemmen verwendet, die zwei bzw. mehrpolig ausgebildet sein können. Diese Abzweigklemmen besitzen einen Klemmenträger; der ein napfartiges Gehäuseunterteil aufweist, in das eine der Anzahl der Pole entsprechende Anzahl von Klemmen eingesetzt ist. Nach Einsetzen der Klemmen wird das Gehäuseunterteil mittels eines Deckels abgedeckt. Der Klemmenträger ist gemäß der Norm VDE 0603, Teil 2, Ausführung C so auszugestalten, daß eine Sicherheit gegen Berühren gewährleistet ist.

Im allgemeinen sind diese Hauptleitungsabzweigklemmen auf einer Hutprofiltragschiene angeordnet und neuerdings ist es auch bekannt geworden, die Hauptleitungsabzweigklemmen der Zählertragplatte zuzuordnen. Hierzu ist mit der Zählertragplatte ein Gerüst aus Metallstäben verbunden, und die Hauptleitungsabzweigklemme ist auf dem Gerüst befestigt.

Eine Installationsverteilung der eingangs genannten Art ist aus der GB 2 218 275 A bekannt geworden. Dabei werde Klemmkörper aus elektrisch leitendem Material auf einen Vorsprung des Gehäuses aufgelegt und mittels zusätzlicher CLIP-Elementen gut geschützt ist, ist der GB 2 218 275 A nicht zu entnehmen.

Ein Installationsverteiler der eingangs genannten Art ist aus der DE-Z Striebel und John, Ausgabe April 1994, "die Neue N/PE-Klemmschiene am neuen Platz" Seite 3, bekannt geworden. Die Hauptleitungsabzweigklemme allerdings ist dort lediglich im oberen Bereich am Zählerplatz festgerastet, wobei die Rastmittel im Bereich der sich entgegengesetzt liegenden Stirnflächen angeordnet sind. Die Möglichkeit, eine solche Hauptleitungsabzweigklemme an anderer Stelle im Installationsverteiler unterzubringen, ist nicht dargestellt.

Aufgabe der Erfindung ist es, einen Installationsverteiler der eingangs genannten Art noch weiter zu verbessern.

Diese Aufgabe wird erfindungsgemäß durch die Merkmale des Anspruches 1 gelöst. Dabei ist die Hauptleitungsabzweigklemme an der Zählertragplatte festrastbar und festgerastet. Dadurch, dass die Hauptleitungsabzweigklemme an der Zählertragplatte befestigt werden kann und nicht auf der Hutprofiltragschiene bzw. an einem Zählerfeld, wird eine erhebliche Montagevereinfachung erzielt. Die Hauptleitungsabzweigklemme muss nämlich nicht mehr mittels Schraubverbindungen an dem Zählerfeld fixiert werden, sondern kann einfach an der Tragplatte selbst verrastet werden. Dies erfolgt für Klemmen für N + PE und die Außenleiter.

Durch die erfindungsgemäße Ausgestaltung kann die Hauptleitungsabzweigklemme nicht nur am Zählerfeld befestigt werden, sondern kann darüber hinaus auch auf einer Hutprofiltragschiene aufgebracht werden, wodurch die Vielseitigkeit der Anwendbarkeit der erfindungsgemäßen Installationsverteilung erhöht wird.

Zwar ist aus dem DE 297 01 158 U 1 eine Hauptleitungsabzweigklemme bekannt geworden, die auf einer Hutprofiltragschiene aufgebracht werden kann; diese Hauptleitungsabzweigklemme kann aber nur ausschließlich an der Hütprofiltragschiene fixiert werden; damit ist eine flexiblere Anwendbarkeit der Hauptleitungsabzweigklemme nach der DE 297 01 158 U1 nicht möglich.

Anhand der Zeichnung, in der ein Ausführungsbeispiel der Erfindung dargestellt ist, sollen die Erfindung sowie weitere vorteilhafte Ausgestaltungen und Verbesserungen näher erläutert und beschrieben werden.

Anhand der Zeichnung, in der ein Ausführungsbeispiel der Erfindung dargestellt ist, sollen die Erfindung sowie weitere vorteilhafte Ausgestaltungen und Verbesserungen näher erläutert und beschrieben werden.

Es zeigen:
- Fig. 1: eine Aufsicht auf eine Zählertragplatte mit zwei Hauptleitungsabzweigklemmen, und
- Fig. 2: eine perspektivische Ansicht einer Hauptleitungsabzweigklemme in Explosionsdarstellung.

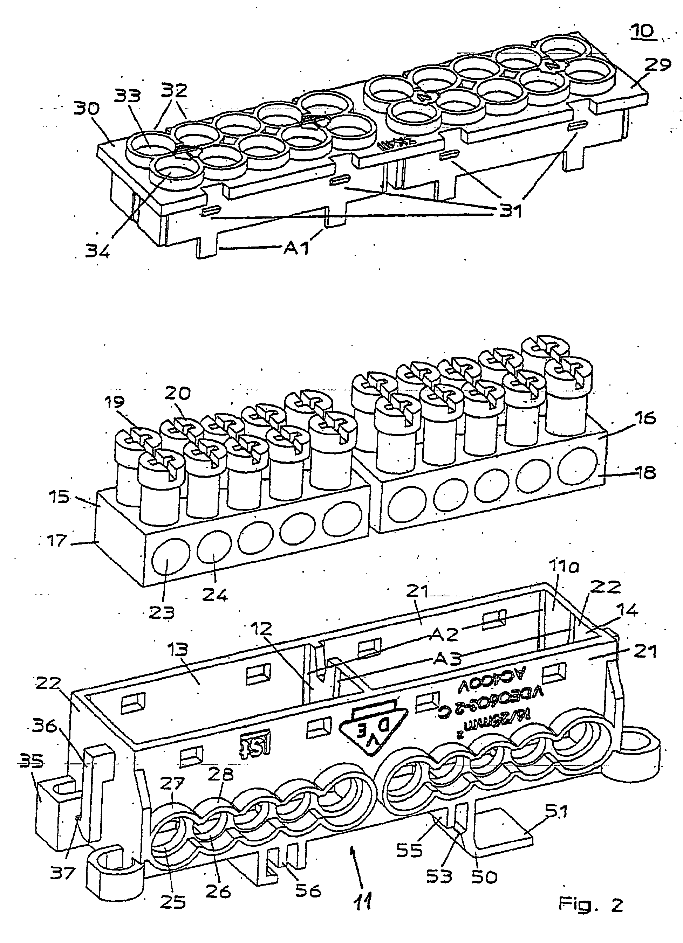

Es sei nun Bezug genommen auf die Fig. 2.

Eine zweipolige Hauptleitungsabzweigklemme 10 besitzt einen Klemmenträger 11, der ein napfartiges Gehäuseunterteil 11a aufweist, in dem durch eine Zwischenwandung 12 zwei Räume 13 und 14 gebildet sind, in die Klemmen 15, 16 eingesetzt sind. Diese Klemmen 15, 16 besitzen je einen Klemmenkörper 17, 18, in den Klemmschrauberi 19, 20 usw. eingeschraubt werden, wobei der Verlauf der Klemmschraube 19, 20 so gewählt ist, daß nach dem Einsetzen der Klemmenkörper 17 und 18 die Schrauben parallel zu den Gehäuseseitenwänden 21 und 22 verlaufen.

Die Klemmenkörper 17 und 18 besitzen senkrecht zu den Klemmschraubengewindelöchern (nicht dargestellt) verlaufende Klemmräume oder Öffnungen 23, 24 ggf. unterschiedlichen Durchmessers (die Öffnungen des Klemmkörpers 18 sind nicht beziffert), und in der Seitenwand 21 sind an die Öffnungen 23, 24 angepaßte Durchbrüche 25, 26 zur Leitungseinführung, die von einem zylindrischen vorstehenden Kragen 27 umgeben sind, vorgesehen; dieser Kragen bewirkt eine Berührungssicherhert. Er kann dabei jeder einzelnen Öffnungen zugeordnet oder als eine Leiste ausgebildet sein, die den Durchbrüchen 25, 26 zugeordnet sind, wobei der zylindrische Kragen 27 des Durchbruches 25 direkt in einen Kragenbogen 28 übergeht, der der Öffnung 26 zugeordnet ist. Allerdings sind diese den Berührungsschutz erzeugende Krägen 27, 28 für die Erfindung nur von geringer Bedeutung.

Nach dem Einsetzen der Klemmen 15 und 16 in ihre Räume 13 und 14 wird das Gehäuseunterteil 11 a mittels eines Deckels 29 verschlossen, der ins Innere der Seitenwandungen 21, 22 eingreift und eine Deckplatte 30 besitzt, deren Außenkontur der Umfangskontur der Seitenwände 21, 22 entspricht. Mittels Verrastungselementen 31 wird der Deckel 29 am Gehäuseunterteil 11 a fixiert. Zusätzliche Stege A1 am Deckel 29 und A2 und A3 im Gehäuseunterteil 11 a fixieren die Klemmen 15, 16 in dem die Stege A2 und A3 den Aufnahmeraum für die Klemmen 15, 16 verkieinern und die Stege A1 zu einer besseren Führung für den Deckel 29 dienen.

Auf der Außenseite der Abdeckplatte 30 sind den Krägen 27, 28 entsprechende Krägen 32 vorgesehen, die jeweils einen Durchbruch 33, 34 umgeben, so daß auch hier eine Berührungssicherheit erzeugt wird; durch die Durchbrüche 33, 34 hindurch sind die Klemmschrauben 19, 20 zugänglich.

An den Stirnflächen, also an den Außenflächen der Seitenwände 22, befinden sich Führungsnasen 35, wobei hier nur die Führungsnase der Außenfläche der Seitenwand 22 sichtbar ist. Weiterhin sind an den Außenflächen Rastarme 36 mit je einer Rastnase 37 angeformt, die parallel zu den Führungsnasen 35 verlaufen. Wie weiter unten dargestellt wird, werden die Führungsnasen 35 in entsprechende Führungskanäle eingesetzt.

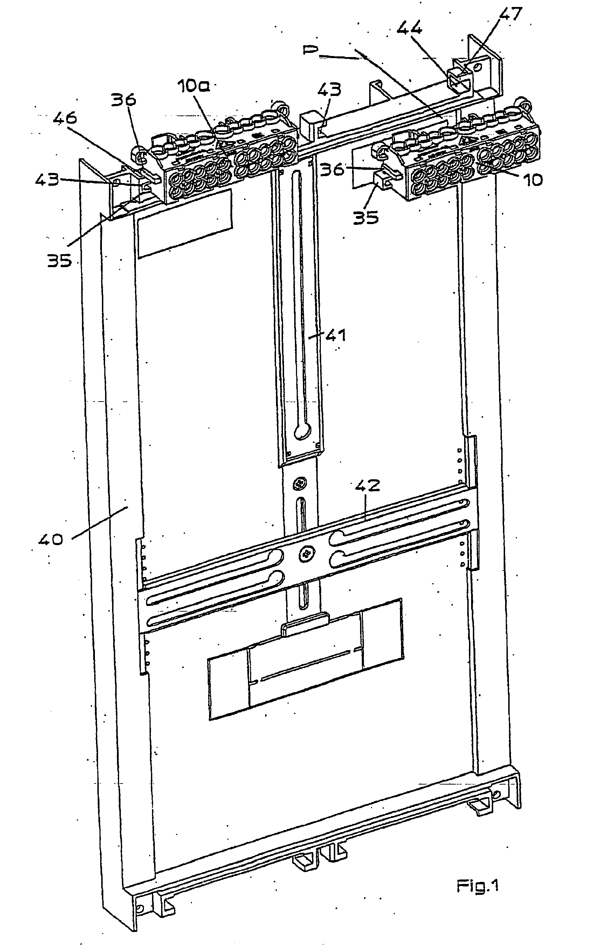

Die Fig. 1 zeigt eine Zählertragplatte 40 mit Bauteilen 41, 42 zur Fixierung eines Zählers. Diese Zählertragplatte 40 ist aus Kunststoff hergestellt und ein einteiliges Element. An der in der Fig. 1 oben befindlichen Schmalkante der Zählertragplatte sind die Führungskanäle 43, 44 angeformt, die als Taschen ausgebildet sind, die nach vorne und aufeinanderzu hin offen sind. In diese Führungskanäle 43 und 44 werden die Führungsnasen 35 eingefügt, wobei sich die Rastarme 36 außerhalb, d. h. oberhalb (in der Zeichnung gesehen) der Taschen mit den Führungskanälen 43, 44 befinden. In der Fig. 1 ist rechts die Klemme 10 dargestellt, kurz bevor sie in Pfeilrichtung P senkrecht zur Ebene der Zählertragplatte 40 an dieser festgerastet wird.

Links ist eine Hauptleitungsabzweigklemme 10a dargestellt, bei der die Führungsnasen 35 schon in die entsprechenden Führungskanäle 43, 44 (letztere ist verdeckt) teilweise eingeführt sind. Man erkennt, daß an den den Längsseitenkanten der Zähiertragplatte 40 benachbarten Führungskanälen 43, 44 Leisten 46, 47 angeformt sind, hinter die die Rastnasen der Rastarme 36 nach dem Einsetzen eingeschnappt sind.

Der besondere Vorteil der Erfindung besteht darin, daß sich durch die Fixierung der Hauptleitungsabzweigklemme bzw. der Hauptleitungsabiweigklemmen 10, 10a an der der Zählertragplatte 40 selbst eine erhebliche Platzersparnis ergibt. Insbesondere ergibt sich auf der Hutprofiltragschiene zusätzlicher Montageplatz für weitere Geräte.

An der Bodenseite, d. h. an derjenigen Seite, die dem Deckel entgegengesetzt liegt, sind nach außen weisende L-förmige Arme 51, 52 angeformt, die die Mittel 50 zum Festrasten der Hauptleitungsabzweiklemme 10 auf einer Hutprofiltragschiene bilden. Zu diesem Zweck sind die L-förmigen Arme 51, 52 federnd ausgebildet und besitzen Haltenasen 53, 54, die aufeinanderzuweisen und eine Hutprofiltragschiene an ihren Längskanten umfassen. Parallel zu den L-förmigen Armen 51 und 52 innerhalb der beiden Arme 51 und 52 sind Auflageleisten 55 und 56 vorgesehen, die auf die nach außen abgewinkelten Schenkel der Hutprofiltragschiene aufliegen.

## Patentansprüche

1. Installationsverteiler, insbesondere Zählerfeld mit Zählertragplatte (40), die in einem Verteilergehäuse untergebracht sind, ggf. mit einem Zähler und weiteren Komponenten, und mit wenigstens einer der Zählertragplatte (40) zugeordneten Hauptleitungsabzweigklemme (10, 10a) wobei ein napfartiges Gehäuseunterteil (11a), zwei Klemmenkörper (15, 16) mit Klemmenschrauben (19, 20) und einen Deckel (29) aufweisende Hauptleitungsabzweigklemme (10 ,10a) an der Zählertragplatte (40) festrastbar und festgerastet ist, wobei an den seitlichen Stirnflächen (22) des Klemmenträgers der Hauptleitungsabzweigklemme (10 ,10a) Führungsnasen (35) angeformt sind, die in Führungskanäle (43, 44) an der Zählertragplatte (40) einfügbar sind, wobei die Führungskanäle (43, 44) senkrecht zur Ebene der Zählertragplatte (40) verlaufen und wobei an den Stirnflächen (22) der Hauptleitungsabzweigklemme (10, 10a) Rastarme (36) angeformt sind, die Rastnasen (37) aufweisen, die im festgerasteten Zustand hinter Stufungen (46, 47) an der Zählertragplatte (10) greifen, **dadurch gekennzeichnet, dass** die Hauptleitungsabzweigklemme (10, 10a) an ihrer Bodenfläche mit Mitteln (50) versehen ist, mit denen sie auf einer Hutprofiltragschiene befestigbar ist.

2. Installationsverteiler nach Anspruch 1, **dadurch gekennzeichnet, dass** die Hauptleitungsabzweigklemme (10, 10a) zusätzlich zur Sicherung festschraubbar ist.

## Claims

1. An installation distributor, especially a meter panel with a meter carrier plate (40), which are housed in a distributor housing, optionally with a meter and further components, and with at least one main line branch terminal (10, 10a) associated with the meter carrier plate (40), with a cup-like bottom part (11a) of the housing, two terminal bodies (15, 16) with terminal screws (19, 20) and a main line branch terminal (10, 10a) comprising a cover (29) being fixedly latchable or latched to the meter carrier plate (40), with guide noses (35) being formed onto the lateral face surfaces (22) of the terminal board of the main line branch terminal (10, 10a), which noses can be inserted into guide ducts (43, 44) on the meter carrier plate (40), with the guide ducts (43, 44) extending perpendicular to the plane of the meter carrier plate (40) and with latching arms (36) being formed on the face surfaces (22) of the main line branch terminal (10, 10a) which comprise latching noses (37) which in the tightly latched state engage behind gradations (46, 47) on the meter carrier plate (10), **characterized in that** the main line branch terminal (10, 10a) is provided on its floor surface with means (50) with which it can be fastened to a top-hat rail.

2. An installation distributor according to claim 1, **characterized in that** the main line branch terminal (10, 10a) can additionally be screwed tight for securing purposes.

## Revendications

1. Distributeur d'installation, en particulier tableau de compteur, avec une plaque support de compteur (40), qui est logée dans le boîtier de distributeur, le cas échéant avec un compteur et d'autres composants, et avec au moins un bornier de dérivation de ligne principale (10, 10a) associé à la plaque support de compteur (40), une partie de boîtier (11a) inférieure conformée en cuvette, deux ensembles à bornes (15, 16) avec des vis de serrage (19, 20) et le bornier de dérivation de ligne principale (10, 10a) qui comporte un couvercle (29) pouvant être encliquetés et étant encliquetés sur la plaque support de compteur (40), des ergots de guidage (35) qui peuvent être engagés dans des canaux de guidage (43, 44) sur la plaque support de compteur (40) étant aménagés sur les faces frontales latérales (22) du support du bornier de dérivation de ligne principale (10, 10a), lesdits canaux de guidage (43, 44) s'étendant perpendiculairement au plan de la plaque support de compteur (40), et des bras d'encliquetage (36) avec des ergots d'encliquetage (37) qui, dans la position encliquetée, s'accrochent derrière des gradins (46, 47) sur la plaque support de compteur (40) étant aménagés sur les faces frontales latérales (22) du bornier de dérivation de ligne principale (10, 10a), **caractérisé en ce que** le bornier de dérivation de ligne principale (10, 10a), au niveau de son fond, est pourvu de moyens (50) grâce auxquels il peut être fixé à un rail-support de type oméga.

2. Distributeur d'installation selon une des revendications 1 ou 2 précédentes, **caractérisé en ce que** le bornier de dérivation de ligne principale (10, 10a),en outre, peut être vissé, à des fins de blocage.
